# EUROPÄISCHE PATENTSCHRIFT

(11) **EP 1 520 611 B1**
(45) Veröffentlichungstag und Bekanntmachung des Hinweises auf die Patenterteilung: **28.11.2007**
(21) Anmeldenummer: 04104512.1
(22) Anmeldetag: 17.09.2004
(51) Int. Cl.: B01D 29/21

(54) **Ringfilterelement**
Annular filter element
Elément filtrant annulaire

(30) Priorität: 01.10.2003 DE 10345682
(43) Veröffentlichungstag der Anmeldung: 06.04.2005
(73) Patentinhaber: MANN+HUMMEL GmbH, 71638 Ludwigsburg (DE)
(72) Erfinder: Jokschas, Günter, 71540, Murrhardt (DE); Luka, Helmut, 71672, Marbach (DE)

(56) Entgegenhaltungen:
- EP-A- 1 089 798
- EP-A- 1 144 078

## Beschreibung

### Stand der Technik

Die Erfindung betrifft einen Filter für ein Filtermodul, insbesondere zur Flüssigkeitsfilterung, nach dem Oberbegriff des Patentanspruches 1. Weiterhin betrifft die Erfindung einen Filter für ein Filtermodul zur Verwendung in einem Filtermodulgehäuse nach dem Oberbegriff des nebengeordneten Patentanspruches 8. Zu guter Letzt betrifft die Erfindung ein Verfahren zum Wechseln eines erfindungsgemäßen Filters nach dem Oberbegriff des nebengeordneten Patentanspruches 11.

Die EP 1 144 078 B1 zeigt eine Ölfilterpatrone, welche aus einem Filtermedium, einem Stützrohr, welches Bohrungen zum Durchlass des Öls aufweist, und zwei Folienendscheiben, die die Aufgaben der Deckelscheibe bzw. der Bodenscheibe übernehmen, besteht. Das Stützrohr weist hierbei an beiden Enden elastische Zonen auf. Diese werden durch axiale Schlitze sowie durch einen Sprung in der Wandstärke des Stützrohres im Bereich der Schlitze gebildet. Hierbei ist die Ölfilterpatrone in ein Gehäuse eingesetzt, wobei die Patrone mit der einen Seite auf einen Rohrstutzen aufgeschoben wird, welcher mit einem Ölauslass verbunden ist. Bei der Montage der Ölfilterpatrone auf dem Rohrstutzen weitet sich die Folienendscheibe radial auf. Die hierzu nötige Elastizität des Mittelrohres wird durch die Schlitze im Endbereich ermöglicht. Das gereinigte Öl tritt axial in den Rohrstutzen ein und verlässt diesen dann durch den Auslass.

Aufgabe der Erfindung ist es, einen Filter für ein Filtermodul zu schaffen, welcher einfach und kostengünstig in der Herstellung ist und welches ebenso mit Aufnahmestutzen korrespondieren kann, bei denen die Möglichkeit einer axialen Fluideinströmung nicht gegeben ist.

Diese Aufgabe wird durch die Merkmale des Patentanspruches 1 gelöst. Der Patentanspruch 8 beschreibt die Verwendung des gattungsgemäßen Filters in einem Filtermodulgehäuse und ferner wird gemäß Patentanspruch 11 das Verfahren zum Wechseln eines Filters in einem Filtermodul beansprucht.

### Vorteile der Erfindung

Der erfindungsgemäße Filter für ein Filtermodul, insbesondere zur Flüssigkeitsfilterung, besteht aus einem hohlzylinderförmigen Filtereinsatz, welcher von der zu filtrierenden Flüssigkeit radial von außen nach innen durchströmt wird. Der hohlzylindrische Filtereinsatz kann hierbei ein sternförmig gefaltetes Filterpapier sein, es ist jedoch auch möglich, hierzu einen Vlieswickel oder sonstige im Stand der Technik bekannte Filtermedien, welche sich zu einer hohlzylindrischen Form formen lassen, denkbar. Im Inneren des hohlzylindrischen Filtereinsatzes ist konzentrisch ein zylinderförmiges Stützrohr angeordnet, welches mehrere über den Umfang verteilte Öffnungen aufweist und vorzugsweise in Form eines Gitters aufgebaut ist, um einen genügend großen Flüssigkeitsdurchsatz zu gestatten. Wenigstens ein Ende des Stützrohres weist einen mehrfach kronenförmig geschlitzten und ringförmigen Endkragen auf, wobei die axialen Schlitze den ringförmigen Endkragen in mehrere Teilsegmente aufteilen. Die Teilsegmente sind durch ihre axiale Schlitzung radial beweglich. Weiterhin sind der im Inneren des hohlzylindrischen Filtereinsatzes konzentrisch angeordnete Endkragen und der hohlzylindrische Filtereinsatz an seiner Stirnseite mit seiner flexiblen, kreisringförmigen Endscheibe formschlüssig und unlösbar verbunden. Die formschlüssige Verbindung kann über Kleben, Schweißen, Aufschmelzen oder sonstige im Stand der Technik bekannte Verbindungsarten erfolgen. Ausgehend vom zylinderförmigen Teil des Stützrohres sind die Teilsegmente des Endkragens nach innen in Richtung der Mittelachse des Stützrohres geneigt, wobei der Neigungswinkel 90° nicht übersteigt. Der Winkel ist so zu verstehen, dass die Öffnung des Winkels in Richtung der zugehörigen Endscheibe, welche die Verbindung zwischen Endkragen und Filtereinsatz darstellt, zeigt. Diese Kröpfung des Endkragens ermöglicht einen Durchmesserunterschied zwischen dem Innendurchmesser der kreisringförmigen Endscheibe und dem Innendurchmesser des zylindrischen Teils des Stützrohres. So ist es möglich, den Auslass, welcher im übertragenen Sinne durch den inneren Durchmesser der kreisringförmigen Endscheibe erfolgt, räumlich radial nach innen gesehen vom zylindrischen Teil des Stützrohres zu verlagern. Durch die Schlitzung des Endkragens weist das Ende des Stützrohres im Bereich der formschlüssigen Verbindung mit der flexiblen Endscheibe eine elastische Zone auf. Dadurch wird eine Deformation der elastischen Deckelscheibe nicht durch das Stützrohr behindert. So ist ein zuverlässiger Formschluss zwischen Stützrohr und Deckelscheibe in jeder Situation gewährleistet. Wird der Filter in einem Filtergehäuse montiert, ergibt sich am Anschlusselement des Filtergehäuses eine Deformation der Deckelscheibe des Filters. Dadurch wird zum einen die Fixierung des Filters und zum anderen eine Dichtung gegenüber der Gehäusewand erzielt. Durch die elastische Zone am Stützrohr wird die notwendige Montagekraft für den Filter verringert. Außerdem verringert sich die Gefahr eines Abscherens der flexiblen Endscheibe von dem Stützrohrende während der Montage. Zur Erhöhung der Flexibilität der Teilsegmente des ringförmigen Endkragens besteht auch die Möglichkeit, die Materialstärke in diesem Bereich zu reduzieren.

Gemäß einer vorteilhaften Ausgestaltung der Erfindung ist der Innendurchmesser der flexiblen, kreisringförmigen Endscheibe geringer als der kleinste Innendurchmesser des ringförmigen Endkragens des Stützrohres. Hierdurch ist gewährleistet, dass es zu einer vollständigen radialen Abdichtung zwischen der Endscheibe und einem in diese Endscheibe hineinragenden Auslassstutzen gewährleistet ist. Durch den Unterschied der Durchmesser erhöht sich die Flexibilität der Endscheibe im direkten Bereich der inneren Durchgangsöffnung, wodurch ein vollumfängliches Anliegen der Endscheibe am Auslassstutzen sichergestellt ist.

Es ist vorteilhaft, die Teilsegmente des Endkragens so zu gestalten, dass wenigstens jedes zweite Teilsegment am äußeren Ende des Endkragens eine Nase, welche sich im Wesentlichen parallel zur Stirnseite des hohlzylindrischen Filtereinsatzes radial nach außen erstreckt, aufweist. Diese Nase bedeckt dann stirnseitig die Kluft zwischen dem Ende der Teilsegmente und dem Anfang des hohlzylindrischen Filtereinsatzes und verhindert so ein Verformen der flexiblen Endscheibe, welche Endkragen und Filtereinsatz verbindet. Die Nasen können dabei einstückig mit den Teilsegmenten verbunden sein und schon im Herstellungsprozess mitgeformt werden oder jedoch nachträglich mit den Teilsegmenten verbunden werden. Sinn und Zweck der Nasen ist es hierbei, eine im wesentlichen durchgehende Auflagefläche vom äußeren Ende des hohlzylindrischen Filtereinsatzes bis zum inneren Ende des Endkragens für die kreisringförmige Endscheibe herzustellen. Dadurch ergeben sich beim Verbinden der Endscheibe mit dem Filtereinsatz und dem Stützrohr keinerlei Einfallstellen über die Fläche der flexiblen, kreisringförmigen Endscheibe.

Gemäß einer alternativen Ausgestaltung der Erfindung sind ― ausgehend vom axialen Startpunkt der geneigten Teilsegmente im Endkragen ― weitere Teilsegmente im Wesentlichen parallel zum zylinderförmigen Teil des Stützrohres angeordnet. Die weiteren Teilsegmente erstrecken sich bis zu einer gedachten Verbindungslinie zwischen oberem Abschluss des Endkragens und oberem Abschluss des hohlzylindrischen Filtereinsatzes.

Auch diese Variante dient der Vermeidung von Einfallstellen im Bereich der kreisringförmigen Endscheibe.

Gemäß einer weiteren vorteilhaften Ausgestaltung weist das Stützrohr den mehrfach kronenförmig geschlitzten und ringförmigen Endkragen an beiden Enden auf, wobei diese zueinander symmetrisch sind. Ein mit einem derartigen Stützrohr ausgeführtes Filterelement hat den Vorteil, verwechslungssicher in ein Filtermodulgehäuse eingebaut werden zu können. Da beide Seiten zueinander symmetrisch sind, spielt es keine Rolle, welche Seite auf den Auslassstutzen aufgeschoben wird. Weiterhin birgt die symmetrische Anordnung einen Vorteil bei der Produktion des Stützrohres.

Gemäß einer weiteren Ausgestaltung der Erfindung ist das Stützrohr des Filters wenigstens einmal axial zwischen den Enden geteilt, wobei die Teilungsebene außerhalb des Endkragens verläuft. Dies erweist sich als vorteilhaft bei bestimmten Produktionsverfahren und hat weiterhin den Vorteil, bei z.B. einer zweifachen Teilung über die Länge des Mittelstückes, welches besonders einfach herstellbar ist, besonders variabel bei der Gesamtlänge der Stützrohre zu sein. So ergeben sich einfache Anpassungsmöglichkeiten an unterschiedliche Filtergrößen.

In vorteilhafter Weise ist das Stützrohr aus einem spritzgießfähigen Material hergestellt. So lässt sich ein günstiges Herstellungsverfahren mit einem geringen Gewicht und weiterhin geringen Materialkosten kombinieren. Aufgrund der Neigung der Teilsegmente des Endkragens im Stützrohr sollte das Material, wie z.B. PA66, glasfaserverstärkt immer noch eine gewisse Flexibilität aufweisen, um trotz des Hinterschnittes gut und zerstörungsfrei entformt werden zu können. Denkbar ist hierbei auch eine Warmentformung, da das Material durch die erhöhte Temperatur weitaus flexibler und unempfindlicher gegenüber Verformung ist. Ebenso macht bei der spritzgegossenen Version die mehrteilige Ausführung Sinn, da in der mehrteiligen Form die Herstellung bzgl. Des Hinterschnitts weitaus einfacher ist. Die einteilige Version hat demgegenüber den Vorteil nur ein Werkzeug zur Herstellung zu benötigen.

Gemäß einer vorteilhaften Ausgestaltung der Erfindung wird der oben beschriebene Filter in einem Filtermodulgehäuse verwendet, wobei im Filtermodulgehäuse Aufnahmemöglichkeiten zur korrespondierenden Aufnahme des Filters angeordnet sind. Die Aufnahmemöglichkeiten sind dadurch gekennzeichnet, dass sie den Filter fest und sicher halten, wobei die eine Aufnahmemöglichkeit zudem auch der Auslassstutzen für den Auslass des gefilterten Fluides darstellt. Es muss sichergestellt sein, dass bei jeglicher Vibration, Schräglage oder sonstiger Belastung des Filtermoduls der Filter seine Funktion einwandfrei erfüllt. Aufnahmemöglichkeiten können hierbei z.B. Feder-Nut-Systeme, Ausbuchtungen, die genau der Kontur des Filters entsprechen, oder sonstige konstruktive korrespondierende Möglichkeiten zur kraftschlüssigen Verbindung von Filter und Filtermodulgehäuse darstellen.

Gemäß einer Ausgestaltung der Verwendung des erfindungsgemäßen Filters in einem Filtermodulgehäuse ist im Filtermodulgehäuse ein Fluidauslass für die gefilterte Flüssigkeit angeordnet, wobei der Fluidauslass in den Endkragen behafteten Teil des Filters eingreift und sich axial im Wesentlichen bis hinter die Teilsegmente des Endkragens erstreckt. Das axiale Ende des im Filter befindlichen Teils des Fluidauslasses ist verschlossen, und die gefilterte Flüssigkeit strömt über radial im Bereich der Teilsegmente des Stützrohres angeordnete Öffnungen in den Fluidauslassstutzen. Der Fluidauslassstutzen liegt dabei vollumfänglich, radial dichtend am inneren Rand der flexiblen, kreisringförmigen Endscheibe an und trennt so die im Inneren des hohlzylindrischen Filters liegende Reinseite von der Rohseite, welche sich außerhalb des Filters befindet. Da die flexible Endscheibe hier eine rein radialabdichtende Wirkung zeigt, lässt sich die geringfügige Aufweitung beim Einsetzen des Fluidauslassstutzens problemlos verkraften, da die formschlüssig mit der flexiblen Endscheibe verbundenen Teilsegmente des Endkragens durch ihre Flexibilität die Aufweitung nicht behindern. Durch die Möglichkeit, hier eine Aufweitung der flexiblen Endscheibe mit einzukalkulieren, kann eine absolute Abdichtung im Bereich der Radialdichtung gewährleistet werden. Da die Einströmung der gefilterten Flüssigkeit nur durch die radialen im Bereich der Teilsegmente des Stützrohres angeordneten Öffnungen erfolgt, erweist sich hier die Neigung der Teilsegmente des Endkragens als sehr vorteilhaft. Hierdurch ergibt sich nämlich ein radialer Abstand zwischen den radialen Eingangsöffnungen des Fluidauslasses und dem Filtermedium, wobei so nun ein zu hoher Druckverlust durch Behinderung der Einströmung vermieden wird. Je größer der die radiale Öffnung umgebende Ringspalt zwischen Filtermedium und Fluidauslassstutzen ist, desto ungehinderter kann das gefilterte Fluid in den Fluidauslassstutzen einströmen.

Gemäß einer vorteilhaften Ausgestaltung weist das Filtermodulgehäuse eine Gehäuseglocke und einen Anschlussflansch auf, wobei der Fluidauslass im Anschlussflansch angeordnet ist. Am unteren im Filter befindlichen Ende des Fluidauslassstutzens ist ein Innengewinde angeordnet, welches zur Aufnahme einer zentralen Schraube zur dichtenden Verbindung von Gehäuseglocke und Anschlussflansch dient. Die Schraube wird von der Außenseite der Gehäuseglocke durch den hohlzylindrischen Filter durchgeführt und mittels des Innengewindes im Fluidauslass mit dem Anschlussflansch verbunden. Zwischen Gehäuseglocke und Anschlussflansch kann hierbei ein Dichtmittel, z.B. ein O-Ring oder eine Labyrinthdichtung, vorgesehen sein. Die Schraube ist hierbei im Wesentlichen konzentrisch in der Gehäuseglocke angeordnet und ergibt dadurch den Vorteil, nur ein Verbindungsmittel zur sicheren dichten Verbindung der beiden Gehäuseteile zu benöti-gen.

Ein erfindungsgemäßes Verfahren zum Wechseln eines Filters in einem Filtermodul, wobei der Filter entsprechend einem der Patentansprüche 1 bis 8 aufgebaut ist, ist durch folgende Schritte gekennzeichnet. Das Filtermodul weist hierzu ein Modulgehäuse mit einer Gehäuseglocke und einem Anschlussflansch auf, wobei im Anschlussflansch ein Öleinlass und ein Ölauslass angeordnet sind. Der Anschlussflansch bietet weiterhin die Möglichkeit, das Ölmodul an geeigneter Stelle in der Umgebung einer Brennkraftmaschine zu fixieren. Die Gehäuseglocke des Modulgehäuses weist eine Ölablassschraube am tiefsten Punkt auf und eine Durchgangsöffnung zur Einbringung einer Verbindungsschraube. Konzentrisch im Filtermodul ist ein hohlzylindrischer Filter angeordnet, wobei die Gehäuseglocke mit dem Anschlussflansch über die Verbindungsschraube dichtend verbunden ist. Hierzu führt die Verbindungsschraube von der Gehäuseglocke durch den hohlzylindrischen Filter in ein Gewinde, welches im Anschlussflansch angeordnet ist. Zum Wechseln des Filters sind folgende Schritte notwendig. Zunächst wird die Ölablassschraube, welche im tiefsten Punkt der Gehäuseglocke angeordnet ist, gelöst und das im Filtermodul vorhandene Restöl wird in ein entsprechendes Gefäß abgelassen. Nach dem Ablassen des im Filtermodul vorhandenen Öls wird die zentrale Schraubverbindung an der Gehäuseglocke mittels eines geeigneten Werkzeuges gelöst und nach dem vollständigen Lösen der zentralen Schraubverbindung wird die Gehäuseglocke vom Anschlussflansch abgezogen. Da der hohlzylindrische Filter am Anschlussflansch und an der Gehäuseglocke fixiert war, besteht die Möglichkeit, dass nach dem Abziehen der Gehäuseglocke der Filter am Anschlussflansch oder an der Gehäuseglocke nach dem Abziehen der Gehäuseglocke lösbar verbunden ist. Der alte Filter wird also entweder von der Gehäuseglocke oder vom Anschlussflansch abgezogen, und der neue Filter wird eingebracht, wobei die Seite des Filters mit dem Endkragen am Stützrohr in Richtung des Ölablasses im Anschlussflansch zeigen muss. Vorzugsweise wird hierbei der neue Filter auf den Ölablassstutzen im Anschlussflansch aufgeschoben, wobei der Filter durch die Radialkraft zwischen Ölablassstutzen und flexibler Endscheibe am Anschlussflansch fixiert bleibt. Im nächsten Schritt wird die Gehäuseglocke über den Filter mit dem Anschlussflansch verbunden, wobei auf einen korrekten Sitz der Dichtung zwischen Anschlussflansch und Gehäuseglocke geachtet werden muss. Der letzte Schritt beinhaltet nun das Durchführen der Schraube durch die Öffnung in der Gehäuseglocke und durch den hohlzylindrischen Filter bis in die im Anschlussflansch vorhandene Gewindebohrung und dem anschließenden Anziehen der Schraubverbindung mit dem dazu vorgesehenen Drehmomentwert.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: schematische Ansicht eines gesamten Filtermodules im Schnitt,
- Figur 2: einen Ausschnitt eines erfindungsgemäßen Filters im Schnitt,
- Figur 3: ein Stützrohr des erfindungsgemäßen Filters im Schnitt,
- Figur 3a: einen Ausschnitt des Stützrohres und
- Figur 3b: eine Variation des Ausschnittes des Stützrohres.

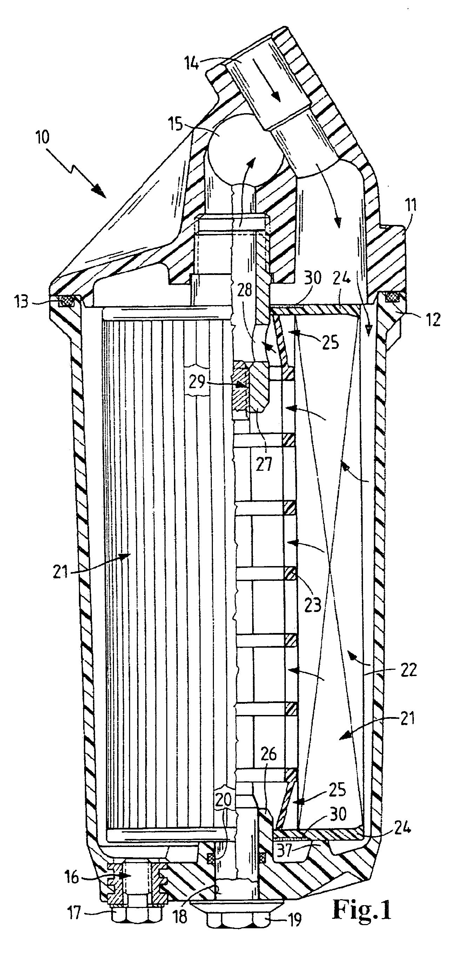

Die Figur 1 zeigt eine schematische Ansicht eines Filtermoduls 10 im Schnitt. Das Filtermodul 10 weist einen Anschlussflansch 11 und eine Gehäuseglocke 12 auf, die an ihrer Verbindungsstelle über einen O-Ring 13 von der Umgebung abgedichtet sind. Im Anschlussflansch 11 sind ein Fluideinlass 14 und ein Fluidauslass 15 angeordnet. Fluideinlass 14 und Fluidauslass 15 haben bevorzugt einen kreisrunden Querschnitt und können mit weiterführenden Leitungen dichtend verbunden werden. Im unteren, der Verbindungsstelle entgegengesetzten, Bereich weist die Gehäuseglocke 12 am tiefsten Punkt einen Restölauslass 16, welcher mit einer Ölablassschraube 17 verschlossen ist, auf, sowie eine konzentrisch in der Gehäuseglocke angeordnete Durchgangsbohrung 18. Durch die Durchgangsbohrung 18 wird eine Verbindungsschraube 19 geführt, welche über eine Dichtung 20, eine Abdichtung vom Gehäuseglockeninneren zur Umwelt aufweist. Im Inneren der Gehäuseglocke 12 ist ein Filter 21 angeordnet. Der Filter 21 weist einen hohlzylindrischen Filtereinsatz, welcher aus zickzackförmig gefaltetem Papier besteht, auf und welcher durch ein im Inneren des Filtereinsatzes 22 angeordnetes Stützrohr 23 gegen ein Kollabieren geschützt ist. Die Enden des Filtereinsatzes 22 sind über flexible Endscheiben 24 mit dem Stützrohr 23 formschlüssig verbunden. Im jeweiligen Endbereich des Filters 21 weist das Stützrohr 23 einen geschlitzten ringförmigen Endkragen 25 auf. Dieser Endkragen 25 ist vom Beginn der axialen Schlitzung an radial schräg nach innen geneigt und stellt an seinem Ende die formschlüssige Verbindung mit der flexiblen Endscheibe 24 her. Die flexible Endscheibe 24 ist wie ein Kreisring aufgebaut, wobei der innere Durchmesser der flexiblen Endscheibe 24 geringer ist als der innere Durchmesser des Endes des Endkragens 25. Der Filter 21 ist auf einen Ölauslassstutzen 27, welcher mit dem Fluidlauslass 15 des Anschlussflansches 11 verbunden ist, aufgesteckt. Hierbei liegt die Innenseite der flexiblen Endscheibe 24 am Außendurchmesser des Ölauslassstutzens 27 an und sorgt so für eine radiale Abdichtung des zylindrischen Innenraumes des Filters 21 vom Bereich um den Filter 21 herum. Im unteren Bereich der Gehäuseglocke 12 wird der Filter 21 vom Aufnahmestutzen 26 gehalten, welcher ebenso an der Innenkante der unteren flexiblen Endscheibe 24 anliegt, diese leicht aufweitet und dadurch ebenso für eine radiale Abdichtung zwischen Roh- und Reinseite sorgt. Ebenso ist wenigstens ein Begrenzungssteg 37 im unteren Bereich der Gehäuseglocke 12 angeordnet, welcher für einen Axialanschlag der unteren flexiblen Endscheibe 24 und damit des Filters 21 sorgt. Hier muss nämlich ein gewisser Abstand zum Boden der Gehäuseglocke 12 gewahrt werden, um den Restölauslass 16 in der Gehäuseglocke 12 nicht zu versperren.

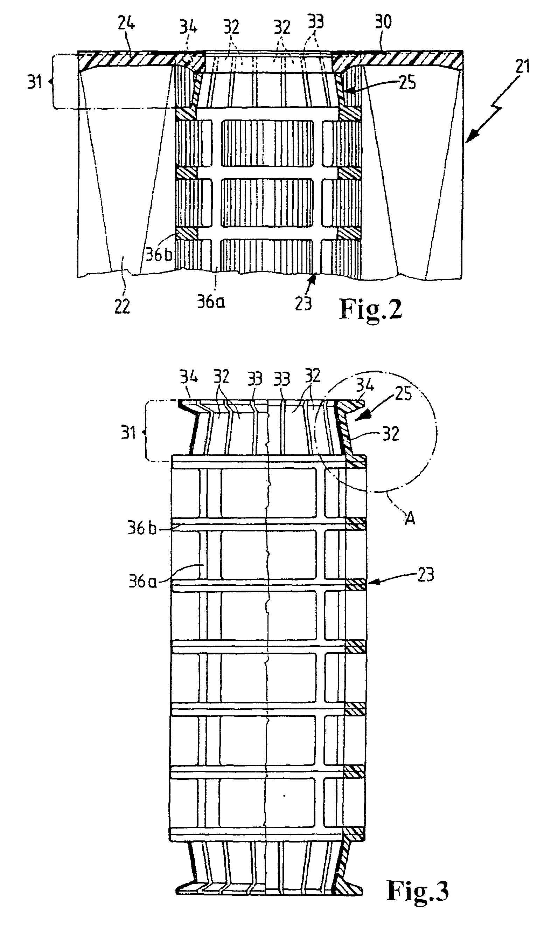

Die Figur 2 zeigt einen Teil eines erfindungsgemäßen Filters im Schnitt. Der Figur 1 entsprechende Bauteile sind mit den gleichen Bezugszeichen versehen. In dieser Figur ist im Schnitt eine Vergrößerung des oberen Teils des Filters 21 zu erkennen. Deutlich ist hierbei zu erkennen der Filtereinsatz 22, das Stützrohr 23, der Endkragen 25 und die flexible Endscheibe 24, welche Endkragen 25 und Filtereinsatz 22 formschlüssig miteinander verbindet. Die ringförmige flexible Endscheibe 24, das Stützrohr 23 mit Endkragen 25 sowie der Filtereinsatz 22 sind hierbei konzentrisch zueinander angeordnet, wobei der Filter 21 von außen nach innen durchströmt wird, so dass der Innenraum im Stützrohr 23 die Reinseite darstellt. In diesem Beispiel ist in die flexible Endscheibe 24 ein kreisringförmiger Vliesring 30 eingebettet, welcher ein Einreißen der flexiblen Endscheibe bei von innen nach außen gehender radialer Belastung verhindern soll. Die flexible Endscheibe 24 wird auf den Filtereinsatz 22 und den Endkragen 25 des Stützrohres 23 aufgeschmolzen, und dabei dringen Stützrohr 23 und Filtereinsatz 22 in die flexible Endscheibe 24 ein, wodurch die formschlüssige Verbindung hergestellt wird. Der Endkragen 25, welcher in einem Endkragenbereich 31 des Stützrohres 23 an beiden Enden des Stützrohres 23 angeordnet ist, ist gekennzeichnet durch nach innen geneigte Teilsegmente 32, welche durch Schlitze 33 voneinander getrennt sind. Die Schlitze 33 haben die gleiche Länge wie der Endkragenbereich 31. Im oberen mit der flexiblen Endscheibe 24 verbundenen Bereich weisen die Teilsegmente 32 jeweils radial nach außen weisende waagerechte Nasen 34 auf, welche dazu dienen, ein Einfallen der flexiblen Endscheibe 24 bei der Verbindung mit dem Filtereinsatz 22 und dem Stützrohr 23 zu vermeiden. Sie überbrücken die waagerechte Strecke zwischen dem Filtereinsatz 22 und dem inneren Endabschnitt der Teilsegmente 32. Zwischen den Endkragenbereichen 31 ist das Stützrohr 23 mit senkrechten Stegen 36a und waagerechten Stegen 36b aufgebaut, um der Durchströmung des Filtereinsatzes 22 von außen nach innen möglichst wenig Widerstand zu bieten.

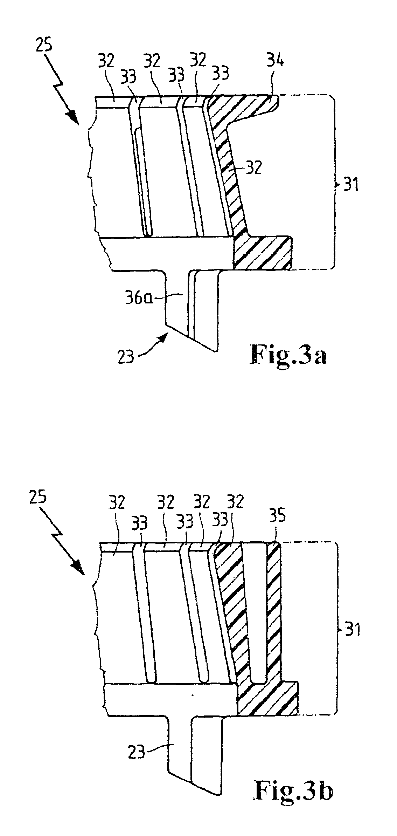

Die Figur 3 zeigt einen Schnitt des Stützrohres des erfindungsgemäßen Filters. Den Figuren 1 und 2 entsprechende Bauteile sind mit den gleichen Bezugszeichen versehen. In dieser Figur ist deutlich die Ausbildung der Nasen 34 an den Teilsegmenten 32 des Endkragens 25 zu erkennen. Hierbei verläuft der obere Rand der Nasen 34 im Wesentlichen waagerecht parallel zur flexiblen Endscheibe 24, und der untere Rand bildet eine dazu schräg verlaufende Linie, welche sich mit dem oberen Rand im ungefähren Bereich über eine gedachte Verlängerung der Mantellinie des Stützkörpers 23 trifft. Ebenso deutlich zu erkennen ist in dieser Figur, dass die Schlitze 33 sich nur über den Endkragenbereich 31 erstrecken. Durch die Trennung der Teilsegmente 32 durch die Schlitze 33 ergibt sich die geforderte Flexibilität der Teilsegmente 23 in Verbindung mit der formschlüssig verbundenen flexiblen Endscheibe 24. Zur Verdeutlichung zweier verschiedener Alternativen ist der Ausschnitt A in den Figuren 3a und 3b noch einmal vergrößert dargestellt.

Figur 3a zeigt den originalen Ausschnitt A des Stützrohres gemäß Figur 3 in einer Vergrößerung. Den Figuren 1 bis 3 entsprechende Bauteile sind mit den gleichen Bezugszeichen versehen. In der Figur 3a ist zu erkennen, dass die Dicke der Teilsegmente 32 im Vergleich zu der Stärke der Stege 36a/b des Stützrohres 23 deutlich geringer ist. Hierdurch wird die geforderte Flexibilität der Teilsegmente 32 erzielt.

Die Figur 3b zeigt den gleichen Ausschnitt A des Stützrohres, allerdings in einer abgewandelten Variante. Den Figuren 1 bis 3 entsprechende Bauteile sind mit den gleichen Bezugszeichen versehen. Im Unterschied zu Figur 3a fällt hierbei die Nase 34 an den Teilsegmenten 32 des Endkragens 25 weg, dafür ist im radial äußeren Bereich des Endkragens am Startpunkt der schräg gestellten Teilsegmente 32 ein weiteres im Wesentlichen senkrechtes Teilsegment 35 angeordnet, welches sich axial bis zur gleichen Höhe der Teilsegmente 32 des Endkragens 25 erstreckt. Dieses weitere senkrechte Teilsegment 35 dient wiederum dem Zweck, ein Einfallen der Endscheibe 24 bei der Verschmelzung mit dem Endkragen 25 und dem Filtereinsatz 22 zu verhindern. Diese Variante ergibt Vorteile bei der Fertigung des Stützrohres als Spritzgießprodukt.

## Patentansprüche

1. Filter (21) für ein Filtermodul (10), insbesondere zur Flüssigkeitsfilterung, bei dem ein hohlzylindrischer Filtereinsatz (22), der von der zu filtrierenden Flüssigkeit radial von außen nach innen durchströmt wird, auf mindestens einem zylinderförmigen Stützrohr (23) angeordnet ist, wobei wenigstens ein Ende des Stützrohres (23) einen mehrfach kronenförmig geschlitzten und ringförmigen Endkragen (25) aufweist, wobei die Schlitze (33) den ringförmigen Endkragen (25) in mehrere Teilsegmente (32) aufteilen und wobei der hohlzylindrische Filtereinsatz (22) und der im Inneren des Filtereinsatzes (22) konzentrisch angeordnete Endkragen (25) mit einer flexiblen, kreisringförmigen Endscheibe (24) unlösbar verbunden sind, **dadurch gekennzeichnet, dass** die Teilsegmente (32) des Endkragens (25) des Stützrohres (23), ausgehend vom zylinderförmigen Teil des Stützrohres (23), nach innen in Richtung der Mittelachse des Stützrohres (23) geneigt sind, wobei der Neigungswinkel 90° nicht übersteigt und die Winkelöffnung in Richtung der zugehörigen Endscheibe (24) zeigt.

2. Filter (21) für ein Filtermodul (10) nach Anspruch 1, **dadurch gekennzeichnet, dass** der Innendurchmesser der flexiblen, kreisringförmigen Endscheibe (24) geringer ist, als der kleinste Innendurchmesser des ringförmigen Endkragens (25) des Stützrohres (23).

3. Filter (21) für ein Filtermodul (10) nach einem der vorhergehenden Ansprüchen, **dadurch gekennzeichnet, dass** jedes Teilsegment (32) am äußeren Ende des Endkragens (25) eine Nase (34), welche sich im Wesentlichen parallel zur Stirnseite des hohlzylindrischen Filtereinsatzes (22) radial nach außen erstreckt, aufweist.

4. Filter (21) für ein Filtermodul (10) nach einem der Ansprüche 1 bis 2, **dadurch gekennzeichnet, dass** ausgehend vom axialen Startpunkt der geneigten Teilsegmente (32) weitere Teilsegmente (35) im Wesentlichen parallel zum zylinderförmigen Teil des Stützrohres (23) angeordnet sind, wobei die weiteren Teilsegmente (35) sich bis zu einer gedachten Verbindungslinie zwischen oberem Abschluss des Endkragens (25) und oberem Abschluss des hohlzylindrischen Filterelements (22) erstrecken.

5. Filter (21) für ein Filtermodul. (10) nach einem der vorhergehenden Ansprüche, **dadurch gekennzeichnet, dass** das Stützrohr (23) den mehrfach kronenförmig geschlitzten und ringförmigen Endkragen (25) an beiden Enden aufweist und diese zueinander symmetrisch sind.

6. Filter (21) für ein Filtermodul (10) nach einem der vorhergehenden Ansprüche, **dadurch gekennzeichnet, dass** das Stützrohr (23) wenigstens einmal axial zwischen den Enden geteilt ist, wobei die Teilungsebene außerhalb des Endkragens (25) verläuft.

7. Filter (21) für ein Filtermodul (10) nach einem der vorhergehenden Ansprüche, **dadurch gekennzeichnet, dass** das Stützrohr (23) aus einem spritzgießfähigen Material besteht.

8. Filtermodul (10) mit einem Filter nach einem der vorhergehenden Ansprüche und einem Filtermodulgehäuse, **dadurch gekennzeichnet, dass** das Filtermodulgehäuse Aufnahmemöglichkeiten zur korrespondierenden Aufnahme des Filters (21) aufweist.

9. Filtermodul (10) nach Anspruch 8, **dadurch gekennzeichnet, dass** im Filtermodulgehäuse ein Fluidauslass für die gefilterte Flüssigkeit angeordnet ist, wobei der Fluidauslass in den Filter eingreift, und sich axial im Wesentlichen bis zum Anfang der Teilsegmente (32) des Endkragens (25) erstreckt, wobei das im Filter (21) befindliche Ende des Fluidauslasses an seinem axialen Ende verschlossen ist und die gefilterte Flüssigkeit über radial, im Bereich der Teilsegmente (32) des Stützrohres (23), angeordnete Öffnungen in den Fluidauslass einströmt und wobei der Fluidauslass radialdichtend vollumfänglich am inneren Rand der flexiblen kreisringförmigen Endscheibe (24) anliegt, wodurch eine Trennung zwischen Roh- und Reinseite erfolgt.

10. Filtermodul (10) nach einem der Ansprüche 8 bis 9, **dadurch gekennzeichnet, dass** das Filtermodulgehäuse eine Gehäuseglocke (12) und einen Anschlussflansch (11) aufweist, wobei der Fluidauslass im Anschlussflansch angeordnet ist und am unteren im Filter (21) befindlichen Ende ein Innengewinde aufweist, welches zur Aufnahme einer zentralen Schraube zur dichtenden Verbindung von Gehäuseglocke (12) und Anschlussflansch (11) dient, wobei die Schraube ausgehend von der Außenseite der Gehäuseglocke (12) den hohlzylindrischen Filter (21) durchstößt.

11. Verfahren zum Wechseln eines Filters (21) nach einem der Ansprüche 1 bis 7 in einem Filtermodul (10), wobei das Filtermodul (10) ein Modulgehäuse mit einer Gehäuseglocke (12) und einem Anschlussflansch (11) aufweist, wobei im Anschlussflansch (11) ein Öleinlass und ein Ölauslass angeordnet sind, wobei ein Filter (21) im Modul-gehäuse angeordnet ist und die Gehäuseglocke (12) eine Ölablassschraube aufweist und mit einer zentralen den Filter durchdringenden Schraubverbindung mit dem Anschlussflansch (11) dichtend verbunden ist, **dadurch gekennzeichnet dass** der Filterwechsel folgende Schritte beinhaltet:
- Lösen der Ölablassschraube und Ablassen des im Filtermodul (10) vorhandenen Öls;
- Lösen der zentralen Schraubverbindung an der Gehäuseglocke (12) und Abziehen der Gehäuseglocke (12) vom Anschlussflansch (11);
- Abziehen des alten Filters (21) und Einbringen des neuen Filters (21), wobei die Seite des Filters (21) mit dem Endkragen (25) am Stützrohr (23) in Richtung des Ölablasses im Anschlussflansch (11) zeigen muss;
- Zusammenfügen von Gehäuseglocke (12) und Anschlussflansch (11) und
- Herstellen einer dichtenden Verbindung zwischen Gehäuseglocke (12) und Anschlussflansch (11) über ein Anziehen der zentralen Schraubverbindung, welche durch den Filter (21) geführt ist, mit einem vorgeschriebenen Drehmoment.

## Claims

1. Filter (21) for a filter module (10), more especially for filtering liquids, the said filter having a hollow-cylindrical filter insert (22), which is traversed by the liquid to be filtered radially from outside to inside and is disposed on at least one cylindrical support tube (23), wherein at least one end of the support tube (23) includes an annular end collar (25) that is slotted in a multiple manner in the shape of a crown, wherein the slots (33) divide the annular end collar (25) into a plurality of part segments (32) and wherein the hollow cylindrical filter insert (22) and the end collar (25) that is disposed concentrically in the interior of the filter insert (22) are connected in a non-detachable manner to a resilient, circular ring-shaped end disc (24), **characterised in that** the part segments (32) of the end collar (25) of the support tube (23), extending from the cylindrical part of the support tube (23), are inclined inwards in the direction of the central axis of the support tube (23), wherein the angle of inclination does not exceed 90° and the angle aperture points in the direction of the associated end disc (24).

2. Filter (21) for a filter module (10) according to claim 1, **characterised in that** the internal diameter of the resilient circular ring-shaped end disc (24) is smaller than the smallest internal diameter of the annular end collar (25) of the support tube (23).

3. Filter (21) for a filter module (10) according to one of the preceding claims, **characterised in that** each part segment (32) at the outermost end of the end collar (25) includes a projection (34), which extends radially outwards substantially parallel to the end side of the hollow cylindrical filter insert (22).

4. Filter (21) for a filter module (10) according to one of claims 1 to 2, **characterised in that**, extending from the axial starting point of the inclined part segments (32), additional part segments (35) are disposed substantially parallel to the cylindrical part of the support tube (23), wherein the additional part segments (35) extend as far as an imaginary connecting line between the upper closure of the end collar (25) and the upper closure of the hollow cylindrical filter element (22).

5. Filter (21) for a filter module (10) according to one of the preceding claims, **characterised in that** the support tube (23) includes the annular end collar (25) that is slotted in a multiple manner in the shape of a crown at both ends and these are symmetrical to each other.

6. Filter (21) for a filter module (10) according to one of the preceding claims, **characterised in that** the support tube (23) is divided at least once in an axial manner between the ends, wherein the joint face extends outside the end collar (25).

7. Filter (21) for a filter module (10) according to one of the preceding claims, **characterised in that** the support tube (23) is produced from a material that can be injection moulded.

8. Filter module (10) with a filter according to one of the preceding claims and a filter module housing, **characterised in that** the filter module housing includes accommodating facilities for the corresponding accommodation of the filter (21).

9. Filter module (10) according to claim 8, **characterised in that** a liquid outlet for the filtered liquid is disposed in the filter module housing, wherein the liquid outlet engages the filter, and extends in an axial manner as far as the start of the part segments (32) of the end collar, wherein the end of the liquid outlet located in the filter (21) is closed at its axial end and the filtered liquid flows into the liquid outlet via openings that are disposed in a radial manner in the region of the part segments (32) of the support tube (23) and wherein the liquid outlet abuts in a radially sealing manner against the inner edge of the resilient circular ring-shaped end disc (24) in a very extensive manner, a separation between the unfiltered side and the filtered side thereby being produced.

10. Filter module (10) according to one of claims 8 to 9, **characterised in that** the filter module housing includes a housing bell (12) and a connecting flange (11), wherein the liquid outlet is disposed in the connecting flange and at the bottom end located in the filter (21) includes an internal thread, which is for receiving a central screw for the sealing connection between the housing bell (12) and the connecting flange (11), wherein the screw extending from the outside of the housing bell (12) passes through the hollow cylindrical filter (21).

11. Method for changing a filter (21) according to one of the claims 1 to 7 in a filter module (10), wherein the filter module (10) includes a module housing with a housing bell (12) and a connecting flange (11), wherein an oil inlet and an oil outlet are disposed in the connecting flange (11), wherein a filter (21) is disposed in the module housing and the housing bell (12) includes an oil drain plug and is sealingly connected to the connecting flange (11) by means of a central screw connection that penetrates the filter, **characterised in that** the process of changing the filter includes the following steps:
- Unscrew the oil drain plug and drain off any oil in the filter module;
- Unscrew the central screw connection at the housing bell (12) and remove the housing bell (12) from the connecting flange (11);
- Remove the old filter (21) and insert the new filter (21), wherein the side of the filter (21) with the end collar (25) at the support tube (23) must point in the direction of the oil drain plug in the connecting flange (11);
- Join together the housing bell (12) and the connecting flange (11) and
- Produce a sealing connection between the housing bell (12) and the connecting flange (11) by tightening the central screw connection, which is guided through the filter (21), at a predetermined torque.

## Revendications

1. Filtre 21 pour un module de filtre 10, notamment pour filtrer un liquide, ayant un insert de filtre 22 cylindrique creux traversé radialement de l'extérieur vers l'intérieur par le liquide à filtrer, et installé sur au moins un tube d'appui, de forme cylindrique 23,
au moins une extrémité du tube d'appui 23 ayant une collerette d'extrémité 25 annulaire, fendue plusieurs fois en forme de couronne,
les fentes 33 de la collerette d'extrémité 25 tubulaire étant divisées en plusieurs segments 32, alors que l'insert de filtre 22 cylindrique creux et la collerette d'extrémité 25 concentrique à l'intérieur de l'insert de filtre 32 sont reliés à un disque d'extrémité 24, annulaire, souple,
**caractérisé en ce que** les segments 32 de la collerette d'extrémité 25 du tube d'appui 23, partant de la partie cylindrique du tube d'appui 23, sont inclinés vers l'intérieur en direction de l'axe du tube d'appui 23, et l'angle d'inclinaison ne dépasse pas 90° et l'ouverture de l'angle est tournée en direction du disque d'extrémité 24 correspondant.

2. Filtre 21 pour un module de filtre 10 selon la revendication 1, **caractérisé en ce que** le diamètre intérieur du disque d'extrémité 24 souple, de forme annulaire est inférieur au plus petit diamètre intérieur de la collerette d'extrémité 25 de forme annulaire du tube d'appui 23.

3. Filtre 21 pour un module de filtre 10 selon l'une des revendications précédentes, **caractérisé en ce que** chaque segment partiel 32 comporte à l'extrémité extérieure de la collerette d'extrémité 25 un bec 34 dirigé pratiquement parallèlement à la face frontale de l'insert de filtre cylindrique creux 22 en s'étendant radialement vers l'extérieur.

4. Filtre 21 pour un module de filtre 10 selon l'une des revendications 1 à 2, **caractérisé en ce que** partant du point de départ axial, les segments inclinés 32 sont associés à d'autres segment 35 essentiellement parallèles à la partie de forme cylindrique du tube d'appui 23, et les autres segments partiels 35 s'étendent jusqu'à la ligne de liaison imaginaire entre le segment supérieur de la collerette d'extrémité 25 et la terminaison supérieure de l'élément de filtre cylindrique creux 22.

5. Filtre 21 pour un module de filtre 10 selon l'une des revendications précédentes, **caractérisé en ce que** le tube d'appui 23 présente aux deux extrémités une collerette d'extrémité 25 en forme de couronne, annulaire, fendue plusieurs fois, et ces collerettes d'extrémité sont symétriques.

6. Filtre 21 pour un module de filtre 10 selon l'une des revendications précédentes, **caractérisé en ce que** le tube d'appui 23 est divisé au moins une fois axialement entre les extrémités et le plan de division passe en dehors de la collerette d'extrémité 25.

7. Filtre 21 pour un module de filtre 10 selon l'une des revendications précédentes, **caractérisé en ce que** le tube d'appui 23 est en une matière susceptible d'être injectée.

8. Module de filtre 10 comportant un filtre selon l'une des revendications précédentes et un boîtier de module de filtre, **caractérisé en ce que** le boîtier de module de filtre présente des possibilités de réception pour recevoir de manière correspondante le filtre 21.

9. Module de filtre 10 selon la revendication 8, **caractérisé en ce que**
le boîtier du module de filtre comporte une sortie de liquide pour le liquide filtré,
la sortie de liquide pénétrant dans le filtre et s'étend axialement principalement jusqu'au début des segments partiels 32 de la collerette d'extrémité 25, l'extrémité de la sortie de liquide qui se trouve dans le filtre 21 est fermée à son extrémité axiale et le liquide filtré arrive radialement par les ouvertures prévues dans la sortie de liquide au niveau du segment partiel 32 du tube d'appui 23, et
la sortie de liquide est appliquée de manière étanche radialement, sur toute la périphérie contre le bord intérieur du disque d'extrémité 24 souple en forme d'anneau de cercle, pour assurer la séparation entre le côté de produit non filtré et le côté de produit filtré.

10. Module de filtre 10 selon l'une des revendications 8 à 9, **caractérisé en ce que** le boîtier du module de filtre comporte une cloche de boîtier 12 et une bride de raccordement 11, la sortie de liquide étant prévue dans la bride de raccordement, et l'extrémité inférieure dans le filtre comporte un filetage intérieur pour recevoir une vis centrale servant à relier de manière étanche la cloche 12 du boîtier et la bride de raccordement 11, la vis traversant le cylindre creux 21 à partir du côté extérieur de la cloche 12 du boîtier.

11. Procédé de changement d'un filtre selon l'une des revendications 1 à 7, dans un module de filtre 10, le module de filtre 10 ayant un boîtier de module avec une cloche 12 et une bride de raccordement 11, la bride raccordement 11 ayant une entrée d'huile et une sortie d'huile, un filtre 21 étant placé dans le boîtier de module alors que la cloche 12 du boîtier présente une vis de sortie d'huile et une liaison vissée qui traverse le filtre en son centre pour être reliée de manière étanche à la bride de raccordement 11, **caractérisé en ce que** le remplacement d'un filtre se fait comme suit :
- desserrage de la vis de sortie d'huile et évacuation de l'huile du module de filtre 10,
- desserrage de la liaison centrale vissée à la cloche 12 et enlèvement de la cloche 12 par rapport à la bride de raccordement 11,
- extraction de l'ancien filtre 21 et mise en place du nouveau filtre 21, le côté du filtre 21 avec la collerette d'extrémité 25 devant être dirigé vers le tube d'appui 23 en direction de la sortie d'huile de la bride de raccordement 11,
- assemblage de la cloche de boîtier et de la bride de boîtier,
- réalisation d'une liaison étanche entre la cloche 12 et la bride de raccordement 11 enserrant la liaison vissée centrale traversant le filtre 21 selon un couple prescrit.
